# EUROPEAN PATENT SPECIFICATION

(11) **EP 1 389 415 B1**
(45) Date of publication and mention of the grant of the patent: **18.06.2008**
(21) Application number: 03425540.6
(22) Date of filing: 07.08.2003
(51) Int. Cl.: A01D 90/02, A01D 90/04, A01D 75/18, A01F 15/10

(54) **Cutting device for herbaceous material or the like for harvesting machines**
Schneidvorrichtung für grasartiges Material für Erntemaschinen
Appareil de coupe de matériaux herbacés pour les machines agricoles récolteuses

(30) Priority: 14.08.2002 IT RM20020430
(43) Date of publication of application: 18.02.2004
(73) Proprietor: Gallignani S.p.A., 48026 Russi RA (IT)
(72) Inventor: Ravaglia, Paolo, 48012 Bagnacavallo RA (IT)
(74) Representative: Leone, Mario

(56) References cited:
- EP-A- 0 792 576
- DE-A- 3 616 759
- DE-A- 3 617 003
- DE-A- 4 302 199
- DE-A- 19 841 598
- GB-A- 2 144 030
- US-A- 6 128 995

## Description

The present invention relates to a protection system for cutting devices of herbaceous material in harvesting machines and, more precisely, to an overload protection device for the blades of the cutting devices for herbaceous material harvesting machines.

Typically, in such an application there is provided an herbaceous material harvester mounted onto the loading machine. The harvester hoists the herbaceous material and conveys the same through a cutting device consisting of a rotor equipped with a series of fins located side-by-side thereamong along the entire length of the rotor. Among the series of fins a row of blades or knives is provided.

Thus, the herbaceous material is cut as the fins cross the blades of the knives. However, a problem lies in that amidst the herbaceous material there may be stones, or other material of a significantly greater hardness with respect to the herbaceous material, which passing among the fins may injure the cutting edge of the knives. For this purpose, different overload safety devices there are provided, wherein the force exerted by the stone onto the cutting edge of the blade biases the latter with respect to the frame. The stress and the displacement of the blade are calibrated by adjusting a spring system onto which each knife is mounted, and for the repositioning of the latter to its original position once the stone has passed through.

As an example of these state of the art overload protection systems, DE3616759 and DE4302199 disclose an overload protection device for cutting apparatuses in round balers where each knife is swingably and rotatably mounted at two points, but it is not provided a selectively disconnection of the same for the selectively functioning thereof.

Further, in US6128995 there is disclosed an overload protection device for cutting device in a agricultural machine where there are arranged a plurality of knives mounted in a swinging manner onto an eccentric shaft, and a disconnecting means for disconnecting each knife. The arrangement does not foresee the possibility of a selective disconnection of the knives with respect to the supporting shaft.

Another system for the protection from the overload in a plurality of knives of the abovementioned type is disclosed in DE 3625512 in the name of Pottinger.

In said patent, the knife system and the related safety devices are supported by a frame that may be lowered to work without cutting the produce.

However, also for such applications a there exist the drawback in that the knives are disconnected by lowering their supporting frame and therefore excessively nearing the frame to the ground, the surface of the latter being often uneven and risking to cause knocks to the frame.

Moreover, another drawback lies in that it is impossible to disconnect a certain number of knives, if needed.

Therefore, object of the present invention is to solve the abovementioned drawbacks by providing an overload protection system for the blades of knives in cutting apparatuses for herbaceous material in round balers or the like which preserves the cutting edge of said blades or knives, and causing no operational interruption due to the passing of hard bodies through the knives.

Another object of the present invention is to provide an overload protection system for the blades of knives in cutting apparatuses for herbaceous material on round balers or the like, which allows the total or selective lowering of the knives with no need to work with the related supporting frame in a lowered position.

A further object of the present invention is to provide an overload protection system for the blades of knives in cutting apparatuses for herbaceous material on round balers or the like, ensuring that the supporting frame for the knives may reliably and without operational interruptions be shifted from the non-cutting condition to the cutting condition.

Hence, the present invention provides an overload protection system for the blades of knives in cutting apparatuses for herbaceous material on round balers or the like substantially as defined in claim 1.

Hereinafter, a detailed description of a preferred embodiment of the system of the present invention will be provided, given by way of example and not for limitative purposes, with reference to the annexed drawings, wherein:
Figure 1 is a partial sectional side view of the system of the present invention, in a first operative condition thereof;
Figure 2 is a partial sectional side view of the system of the present invention, in a second operative condition thereof;
Figure 3 is a partial sectional side view of the system of the present invention, in a third operative condition thereof;
Figure 4a is a perspective view illustrating a detail of a portion of the protection system of the present invention;
Figures 4b and 4c are two schematic views illustrating a detail of a portion of the system for protecting of the present invention in two different operative conditions, respectively;
Figure 5a is an exploded sectional view of a further portion of the system for protecting of the present invention;
Figure 5b is a sectional view frontally illustrating the portion of the system for protecting of the present invention of Figure 5a; and
Figure 5c is a sectional view of another portion of the system for protecting of the present invention; and
Figure 5d is an exploded sectional view of a further portion of the system for protecting of the present invention.

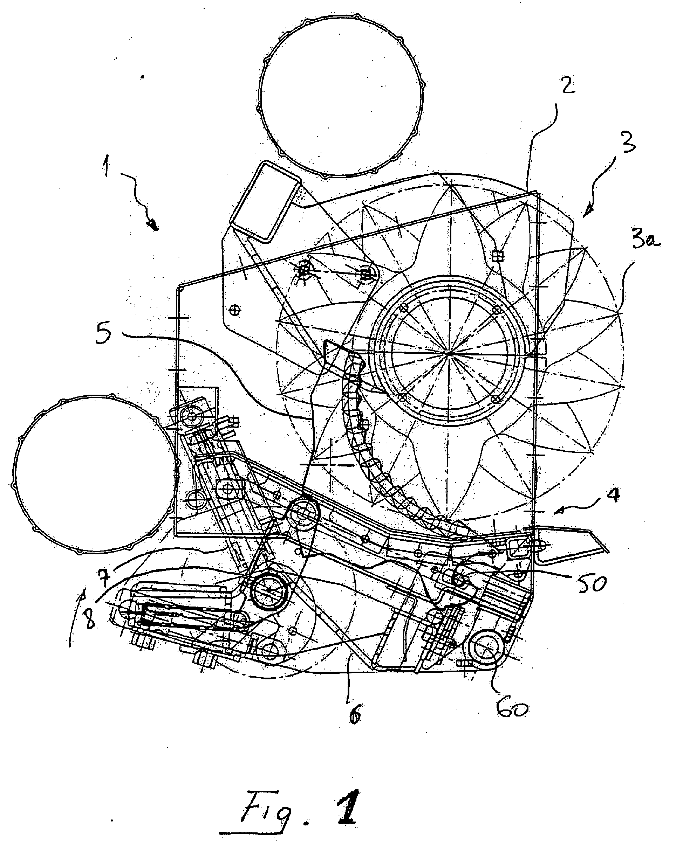

Referring now to Figure 1, the system for protecting the blades of the present invention is illustrated. According to the invention, there is provided a cutting device 1 for herbaceous material, typically comprising a frame 2 onto which there is mounted a rotor 3 equipped with a plurality of fins 3a for carrying herbaceous material inside of a conveying (feeding) channel 4, in which a plurality of knives 5 is located. The conveying channel 4 is defined at its bottom by a floor 40, sideways by the sidewalls of the frame 2 and at its top by the rotor 3.

As it will be made apparent hereinafter, each knife 5 is resiliently and swingably mounted on a supporting frame 6, which in turn is swingably mounted with respect to the frame 2. The excursion of the frame 6 with respect to the frame 2 is controlled by one or more hydraulic actuators 7 (only one shown in the figures).

As it is apparent from the Figure, when the knives 5 are located in the operative cutting condition they project from the channel 4 and are close to the rotor 3 so that the former lie among the rotor fins 3a, thereby generating a set of cutting passes, each pass consisting of a pair of fins 3a and of a knife 5 located therebetween.

Moreover, each knife 5 is supported at its rear end on a supporting member 8. The member 8, it being mounted on a shaft 80 rotatable with respect to the frame 6, is apt to perform an angular excursion with respect to the frame 6. The shaft 80 is apt to perform an angular excursion with respect to latter under the action of a hydraulic actuator 70 (better illustrated hereinafter).

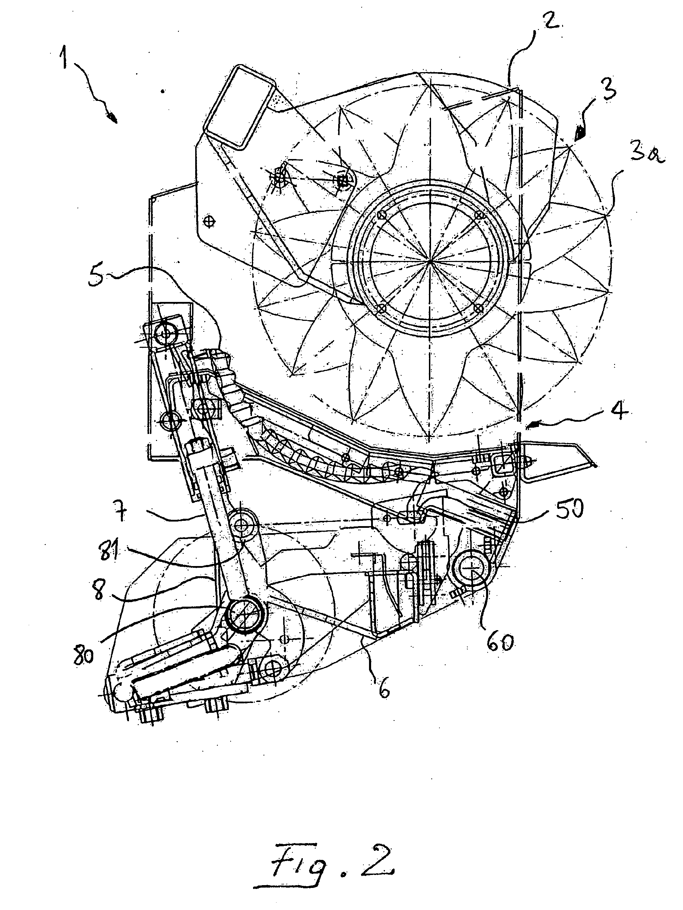

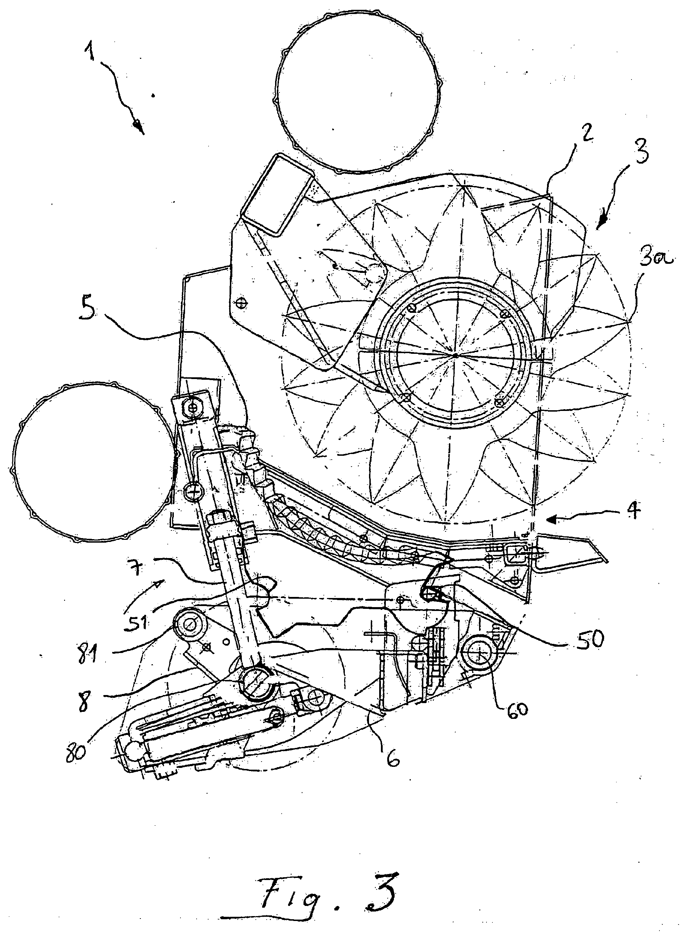

Referring now to Figures 2 and 3, the system of the present invention is illustrated in a condition in which the knives 5 are lowered with respect to the rotor 3 and inside and below the plane of the channel 4. Such a condition is implemented for bale forming when no cutting of herbaceous material or the like is required, sufficing e.g. a mere rotary pressing thereof.

More precisely, following the operation of the hydraulic actuator 70, the supporting arm 8 is rotated downwards about the hinge point 80. This lowers also the plurality of knives 5 until near completely opening up the conveying channel 4. Then, according to the system of the present invention, the herbaceous material can be processed by rotary pressing without being completely cut.

As it is apparent from the figures, each knife 5 is resiliently and swingably mounted on the frame 6. More precisely, and owing to the reasons that will be made apparent hereinafter, the knife 5 is elastically supported at the hinge point 50 as well as at a second point consisting of a seat 51.

The seat 51 is apt to house a rotatable slider 81 of a respective supporting arm 8 mounted onto the shaft 80, which is rotatable onto the frame 6 and controlled by suitable actuators. As it is apparent in the figures, following a rotation of the arm 8 the seat 51 is released, enabling the knife 5 to lower onto the frame 6. Moreover, also the hinge point 50 has an elastic support onto the frame 6 so as to enable the knife 5 to swing thereat (better illustrated hereinafter).

It has to be specified that, should there be a user's need to reset the apparatus from the mere rotary pressing function to the additional herbaceous material cutting function, the knives 5 may be returned to their cutting condition by counter-rotating the arm 8 until bringing the slider 81 into the seat 51 of the knife 5 (as illustrated in Figure 1), thereby bringing the knives 5 out of the channel 4 in a cutting condition onto the rotor 3.

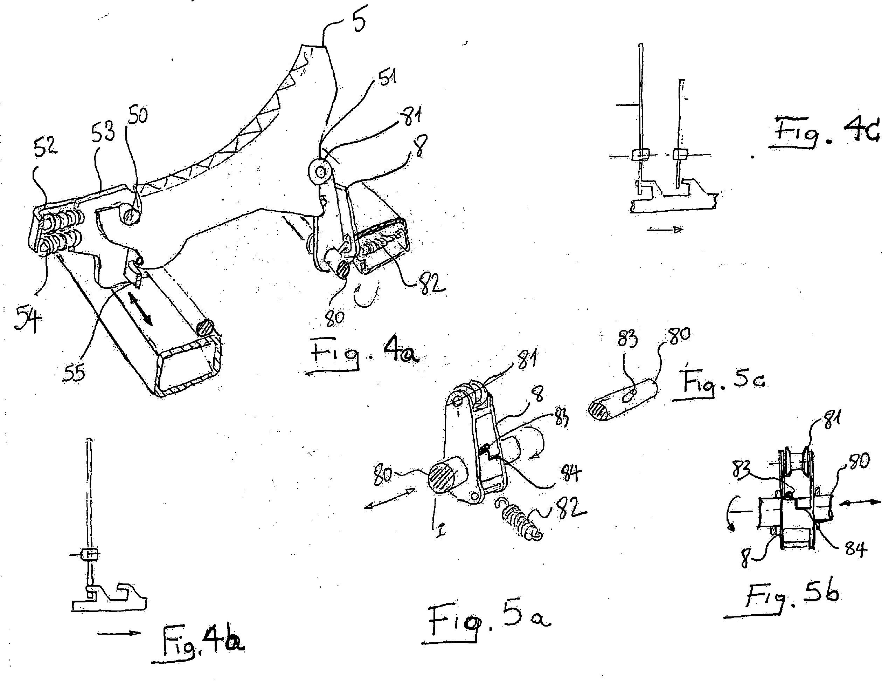

Referring now to Figures 4a and 4b, the system for protecting the blades of the knives 5 of the present invention is schematically illustrated. It has to be specified that for clarity's sake hereinafter an individual knife 5 will be schematically shown, however it has to be understood that the functional scheme depicted herein is to be applied to any knife 5 of the plurality of knives 5 forming the system of the present invention.

Hence, according to the present invention, the hinge point 50 is integral to a plate 52, which is apt to translate with respect to a fixed support 53 having a slot and under the action of a respective pair of springs 54. Moreover, the support 53 serves as guide for a bar 55, which is slidable in a direction transversal to the direction of rotation of the knife 5 and implements the end of stroke of the rotation of the latter. More precisely, and specifically referring to Figures 4b and 4c, the bar 55 has a groove associated to each knife 5 so that by sliding the bar the knife 5 is disengaged from said groove, being thus enabled to further rotate, thereby further lowering the knife with respect both to the channel 4 and to the frame 6 (not shown in the figures) and disconnecting the cutting.

These arrangements enable the knife 5 to lower even when the frame 6 is in a condition raised and close to the frame 2. Moreover, by virtue of the elastic connection of the springs 54 it is ensured that for a determined stress (e.g., following the knocking of a stone or the like with the knife 5) the latter, which is inserted in the channel 4 in the cutting condition, may translate rearwards and swing downwards without compromising its cutting edge. More precisely, the member 8 may rotate clockwise in Figure 4a when the knife 5 shifts rearwards under the action of the pin 90, to then automatically return to the initial operating condition when the obstacle has passed through.

Moreover, specifically referring to Figures 5a, 5b, 5c and 5d, the shaft 80 besides being rotatable may also slide transversally with respect to the knife 5 and onto the arm 8. At the region connecting to the arm 8, the shaft 80 has a peg 83 that fits into the arm 8 in a region in which a slot 84 is formed.

As it is apparent from the figures, following the operation of the hydraulic actuator 70, the shaft 80 rotates and drags the arm 8 only if the peg 83 lies in the leftward abutted condition in the figures. On the other hand, Figure 5d shows one arm 8a according to a second embodiment thereof in which the groove 84 is absent. Such an embodiment enables to transmit the rotary motion of the shaft 80 to the arm 8a, regardless of the peg 83 lying to the right or to the left of the arm 8a.

Hence, according to the present invention, onto the shaft 80 there may be mounted a first plurality of arms 8 for respective knives 5 and a second plurality of arms 8a for a respective second plurality of knives 5. Thus, following a rotation of the shaft 80 onto the frame 6, there is attained a selective lowering of a respective plurality of knives 5 with respect to the frame 6.

Furthermore, according to Figures 4b and 4c, for a complete lowering of the knives 5 with respect to the feeding channel 4, the bar 55 should slide in the direction of the arrow until disengaging the knife 5 from the hinge point 50 (rightwise and position P in Figure 4c). Moreover, always according to Figure 4c, there is shown a bar 55 having two regions S and S1 for engaging to the related knife 5 that differ therebetween in length and dimensions, so as to enable a selective disengaging of the related knife 5 to which each region S and S1 is associated following a sliding of the bar 55.

Always referring to Figure 4c, to totally disconnect the knives 5 the bar 55 should further slide rightward until totally disengaging the former, whereas the peg 83 shifts leftward with respect to the arm 8.

According to the present invention, such an arrangement enables a plurality of configurations of the cutting device, such e.g. as the following ones:
A first configuration, in which all the knives 5 are connected and perform their cutting function;
A second configuration, in which only a fraction of the plurality of knives 5 is connected, and the remaining fraction is lowered in the feeding channel 4; and
A third configuration, in which all the knives 5 are disconnected and the feeding channel 4 is clear.

Moreover, specifically referring to Figure 3, the cutting device is shown in the condition in which the knives 5 can be taken out from the device. More precisely, the taking out is attained with a lowering of the frame 6 by operation of the actuator 7 and the subsequent release of the supporting arms 8 by operation of the actuator 70.

Furthermore, according to said arrangement, in the constrained swinging arrangement of the arm 8, the associated knife 5 can it also swing for a determined stress (e.g., following the knocking of a stone or the like on the knife 5) to preserve its cutting edge.

The system for protecting and cutting of the present invention entails several advantages.

A first advantage lies in that the knives 5 can be lowered with no need to lower the related supporting frame 6 and, therefore, to work with the latter being raised and far from the ground. This enables a more versatile and reliable conversion from cutting device to mere feeding channel, e.g. for round baler for herbaceous material, and vice versa.

A second advantage lies in the particular arrangement of the knife 5 on the related supports 50 and 51, which enable the former to elastically lower following the knocking with a stone or the like, and so as to ensure that the cutting edge of the knife 5 be spared excessive stresses during the passage of the obstacle. In fact, in the presence of a hard body such as a stone or the like, the arm 8 can rotate about the shaft 80 without any rotation by the latter. Moreover, this ensures an interruption- and breaking-free operation.

Another advantage lies in that depending on the needs and by virtue of the specific arrangement of the arm 8, there may selectively be disconnected a mere fraction of the knives 5 with respect to the conveying channel 4, leaving operational solely the remaining fraction thereof.

A further advantage lies in that, according to the arrangement of the devices of the system of the present invention, the resetting of the cutting condition of the knives 5 in the rotary pressing condition is ensured, even after having processed remarkable quantities of herbaceous material. In fact, by virtue of the specific arrangement of the supporting arms 8 onto the knives 5, even in the presence of herbaceous material in the conveying channel 4 and in the slots for sliding the knives onto the floor 40, the hoisting force exerted by the former onto each knife 5 following their insertion in the seat 51 of each knife 5 is always greater than the resisting action caused by said herbaceous material.

A further advantage lies in that the floor 40 forming the conveying channel 4 may be made removable onto the frame 2 so as to allow an easier cleaning of the system to a user. Moreover, on said floor or in lieu of the latter, there may be mounted a plate when the knives are lowered in order to avoid the clogging due to the processing of herbaceous material in the portion thereabove.

Moreover, the floor 40 may be of different shapes and dimensions in which, depending on the needs, it may be employed only with lowered knives to better protect the underlying knives from clogging.

## Claims

1. A cutting apparatus for herbaceous material for round balers, comprising a first frame (2) inside which there is provided a rotor (3) equipped with a plurality of fins (3a) located side-by-side along the entire length of the rotor (3), a conveying channel (4) for the herbaceous material, and a second frame (6) swingably connected with respect to said first frame (2), and a plurality of knives (5) incorporating an overload protection device,
wherein each knife (5) of said plurality of knives is swingably and rotatably mounted onto said second frame (6) and with respect to said conveying channel (4), and each knife (5) being supported onto said second frame (6) at two hinge points (50,51) thereof in a resilient and swinging manner and in an independent manner from the other knives (5),
wherein at each supporting point (50, 51) of each knife (5) of said plurality of knives there is provided elastic means (54,82) mounted with a preset load and apt to yield to a predetermined stress,
wherein each knife (5) is supported by first supporting means (52,53,54,55) and second means (8,8a,80,81,82,83,84) onto said second frame (6),
wherein means (70) for controlling the swinging motion of each knife (5) with respect to said second frame (6) are provided, and
wherein means (7) for controlling the swinging motion of said second frame (6) with respect to said first frame (2) are provided,
**characterised in that** said first supporting means of said overload protection device comprises in combination with each knife (5):
- a hinge point (50);
- a plate (52) for supporting said hinge point (50);
- a fixed support (53) integral to the frame (6) and apt to cooperate with said plate (52) vie a respective pair of springs (54); and
- a bar (55) slidably housed in said fixed support (53) and slidable in a direction which is transversal to the plane wherein said knife swings(5),
the arrangement being such that the bar (55) implements the limit stop of the rotation of said knife (5), and such that following a determined excursion of said bar (55) the knife is free to further swing about said hinge point (50).

2. The cutting apparatus for herbaceous material for round balers according to claim 1, wherein said second supporting means for each knife (5) comprises:
- a supporting arm (8;8a) rotatably mounted on a shaft (80), and slidably positioned in the longitudinal direction on said frame (6);
- a slider (81) rotatably mounted on said arm (8) and apt to cooperate with an edge region (51) of said knife (5);
- a spring (82) connected to said arm (8) and to said second frame (6); and
- a pin (83) located on said shaft (80) and apt to cooperate with a respective region (84) of said arm (8),
the arrangement being such that following a translation of said shaft with respect to said second frame (6) the arm (8) goes from a condition free to swing with respect to said shaft (80) to a condition integrally coupled in rotation by the latter.

3. The cutting apparatus for herbaceous material for round balers according to claims 1 and 2, wherein said means for controlling the swinging motion of each knife (5) with respect to said second frame (6) comprises at least one hydraulic actuator (70).

4. The cutting apparatus for herbaceous material for round balers according to any of the claims 1 to 3, wherein said means for controlling the swinging of said second frame (6) with respect to said first frame (2) comprises at least one hydraulic actuator (7).

5. The cutting apparatus for herbaceous material for round balers according to any of the claims 1 to 4, wherein each knife (5) of said plurality of knives is apt to carry out an unconstrained swinging motion with respect to the other knives (5) and with respect to said first frame (2) and to said second frame (6), and from a first position in which it lies completely projecting inside of the channel (4) and a position in which it lies completely retracted inside of said second frame (6), and wherein said second frame (6) lies in a position completely raised with respect to the ground.

6. The cutting apparatus for herbaceous material for round balers according to any of the claims 1 to 5, wherein said channel (4) comprises a flat member (40) forming said conveying channel (4) that is removably mounted with respect to said first and second frame (2, 6).

7. A round baler incorporating the overload protection device and the cutting apparatus according to the preceding claims.

## Patentansprüche

1. Schneidvorrichtung für grasartiges Material für Rundballenpressen, mit einem ersten Rahmen (2), innerhalb welchem ein Rotor (3) angeordnet ist, der mit einer Vielzahl von Rippen (3a) ausgerüstet ist, die nebeneinander auf der gesamten Länge des Rotors (3) angeordnet sind, einem Förderkanal (4) für das grasartige Material und einem zweiten Rahmen (6), der mit dem ersten Rahmen (2) schwenkbar verbunden ist, und einer Vielzahl von Messern (5), die eine Überlastschutzvorrichtung aufweisen,
wobei jedes Messer (5) der Vielzahl von Messern auf dem zweiten Rahmen (6) und in Bezug auf den Förderkanal (4) schwenkbar und drehbar angebracht ist und jedes Messer (5) an dem zweiten Rahmen (6) in zwei Gelenkpunkten (50, 51) desselben elastisch und schwenkbar und unabhängig von den anderen Messern (5) abgestützt ist,
wobei in jedem Abstützpunkt (50, 51) jedes Messers (5) der Vielzahl von Messern eine elastische Einrichtung (54, 82) vorhanden ist, die mit einer voreingestellten Belastung montiert ist und in der Lage ist, auf eine vorbestimmte Beanspruchung hin nachzugeben,
wobei jedes Messer (5) durch eine erste Trageinrichtung (52, 53, 54, 55) und eine zweite Trageinrichtung (8, 8a, 80, 81, 82, 83, 84) an dem zweiten Rahmen (6) abgestützt ist,
wobei eine Einrichtung (70) zum Steuern der Schwenkbewegung jedes Messers (5) in Bezug auf den zweiten Rahmen (6) vorhanden ist und
wobei eine Einrichtung (7) zum Steuern der Schwenkbewegung des zweiten Rahmens (6) in Bezug auf den ersten Rahmen (2) vorhanden ist,
**dadurch gekennzeichnet, dass** die erste Trageinrichtung der Überlastschutzvorrichtung in Kombination mit jedem Messer (5) aufweist:
- einen Gelenkpunkt (50);
- eine Platte (52) zum Tragen des Gelenkpunktes (50);
- einen festen Träger (53), der integral mit dem Rahmen (6) ausgebildet und in der Lage ist, mit der Platte (52) über ein Paar Federn (54) zusammenzuwirken; und
- eine Stange (55), die in dem festen Träger (53) verschiebbar aufgenommen ist und in einer Richtung verschiebbar ist, die zu der Ebene, in der das Messer (5) schwenkt, transversal ist,
wobei die Anordnung so getroffen ist, dass die Stange (55) den Begrenzungsanschlag der Drehung des Messers (5) bildet, so dass im Anschluss an einen bestimmten Hub der Stange (55) das Messer frei ist, weiter um den Gelenkpunkt (50) zu schwenken.

2. Schneidvorrichtung für grasartiges Material für Rundballenpressen nach Anspruch 1, wobei die zweite Trageinrichtung für jedes Messer (5) aufweist:
- einen Tragarm (8; 8a), der auf einer Welle (80) drehbar montiert ist und in der Längsrichtung auf dem Rahmen (6) verschiebbar positioniert ist;
- einen Schieber (81), der auf dem Arm (8) drehbar gelagert und in der Lage ist, mit einem Randgebiet (51) des Messers (5) zusammenzuwirken;
- eine Feder (82), die mit dem Arm (8) und mit dem zweiten Rahmen (6) verbunden ist; und
- einen Stift (83), der auf der Welle (80) angeordnet und in der Lage ist, mit einem Gebiet (84) des Arms (8) zusammenzuwirken,
wobei die Anordnung so getroffen ist, dass anschließend an eine Verschiebung der Welle in Bezug auf den zweiten Rahmen (6) der Arm (8) aus einem Zustand, in welchem er in Bezug auf die Welle (80) frei schwenkbar ist, in einen Zustand geht, in welchem er mit letzterer drehfest gekuppelt ist.

3. Schneidvorrichtung für grasartiges Material für Rundballenpressen nach Anspruch 2, wobei die Einrichtung zum Steuern der Schwenkbewegung jedes Messers (5) in Bezug auf den zweiten Rahmen (6) wenigstens einen hydraulischen Stellantrieb (70) aufweist.

4. Schneidvorrichtung für grasartiges Material für Rundballenpressen nach einem der Ansprüche 1 bis 3, wobei die Einrichtung zum Steuern des Verschwenkens des zweiten Rahmens (6) in Bezug auf den ersten Rahmen (2) wenigstens einen hydraulischen Stellantrieb (7) umfasst.

5. Schneidvorrichtung für grasartiges Material für Rundballenpressen nach einem der Ansprüche 1 bis 4, wobei jedes Messer (5) der Vielzahl von Messern in der Lage ist, eine unbehinderte Schwenkbewegung in Bezug auf die anderen Messer (5) und in Bezug auf den ersten Rahmen (2) und den zweiten Rahmen (6) und aus einer ersten Position auszuführen, in welcher es so liegt, dass es vollständig in den Kanal (4) hinein vorsteht, und einer Position, in welcher es so liegt, dass es vollständig in das Innere des zweiten Rahmens (6) zurückgezogen ist, und wobei der zweite Rahmen (6) in einer Position liegt, in welcher er in Bezug auf den Boden vollständig angehoben ist.

6. Schneidvorrichtung für grasartiges Material für Rundballenpressen nach einem der Ansprüche 1 bis 5, wobei der Kanal (4) ein flaches Teil (40) umfasst, welches den Förderkanal (4) bildet, der in Bezug auf den ersten und den zweiten Rahmen (2, 6) abnehmbar montiert ist.

7. Rundballenpresse mit der Überlastschutzvorrichtung und der Schneidvorrichtung nach den vorhergehenden Ansprüchen.

## Revendications

1. Appareil de coupe de matières herbacées pour ramasseuses-presses rondes comprenant un premier châssis (2) à l'intérieur duquel est monté un rotor (3) équipé d'une pluralité d'ailettes (3a) placées les unes à côté des autres sur toute la longueur du rotor (3), un conduit de transport (4) pour les matières herbacées et un second châssis (6) raccordé de manière oscillante par rapport audit premier châssis (2) et une pluralité de lames (5) comportant un dispositif de protection de surcharge,
dans lequel chaque lame (5) de ladite pluralité de lames est montée de manière oscillante et rotative sur ledit second châssis (6) et par rapport audit conduit de transport (4) et chaque lame (5) s'appuyant sur ledit second châssis (6) en deux points d'articulation (50, 51) de celui-ci de manière résiliente et oscillante et de manière indépendante des autres lames (5),
dans lequel des éléments élastiques (54, 82) montés avec une charge préréglée et capables de céder à une contrainte prédéterminée sont prévus à chaque point de support (50, 51) de chaque lame (5) de ladite pluralité de lames,
dans lequel chaque lame (5) est supportée sur ledit second châssis (6) par l'intermédiaire de premiers éléments de support (52, 53, 54, 55) et de seconds éléments de support (8, 8a, 80, 81, 82, 83, 84),
dans lequel il est prévu des éléments (70) pour contrôler le mouvement oscillant de chaque lame (5) par rapport audit second châssis (6), et
dans lequel il est prévu des éléments (7) pour contrôler le mouvement oscillant dudit second châssis (6) par rapport audit premier châssis (2),
**caractérisé en ce que** lesdits premiers éléments de support dudit dispositif de protection de surcharge comprennent, en combinaison avec chaque lame (5), :
- un point d'articulation (50) ;
- une plaque (52) pour soutenir ledit point d'articulation (50) ;
- un support fixe (53) solidaire du châssis (6) et capable de coopérer avec ladite plaque (52) au moyen d'une paire respective de ressorts (54) ; et
- une barre (55) logée de manière coulissante dans ledit support fixe (53) et pouvant coulisser dans une direction qui est transversale au plan dans lequel ladite lame (5) oscille,
l'agencement étant conçu de telle manière que la barre (55) sert de butée de fin de course pour la rotation de ladite lame (5) et qu'à la suite d'un déplacement déterminé de ladite barre (55), la lame est libre de continuer à osciller autour dudit point d'articulation (50).

2. Appareil de coupe de matières herbacées pour ramasseuses-presses rondes selon la revendication 1, dans lequel lesdits seconds éléments de support pour chaque lame (5) comprennent :
- un bras de support (8 ; 8a) monté de manière rotative sur un arbre (80) et positionné de manière coulissante dans la direction longitudinale sur ledit châssis (6) ;
- un coulisseau (81) monté de manière rotative sur ledit bras (8) et capable de coopérer avec une zone de bord (51) de ladite lame (5) ;
- un ressort (82) raccordé audit bras (8) et audit second châssis (6) ; et
- une goupille (83) montée sur ledit arbre (80) et capable de coopérer avec une zone respective (84) dudit bras (8),
l'agencement étant conçu de telle manière qu'à la suite d'une translation dudit arbre par rapport audit second châssis (6), le bras (8) passe d'une position dans laquelle il est libre d'osciller par rapport audit arbre (80) à une position dans laquelle il est solidairement couplé en rotation par ce dernier.

3. Appareil de coupe de matières herbacées pour ramasseuses-presses rondes selon les revendications 1 et 2, dans lequel lesdits éléments pour contrôler le mouvement oscillant de chaque lame (5) par rapport audit second châssis (6) comprennent au moins un actionneur hydraulique (70).

4. Appareil de coupe de matières herbacées pour ramasseuses-presses rondes selon l'une quelconque des revendications 1 à 3, dans lequel lesdits éléments pour contrôler le mouvement oscillant dudit second châssis (6) par rapport audit premier châssis (2) comprennent au moins un actionneur hydraulique (7).

5. Appareil de coupe de matières herbacées pour ramasseuses-presses rondes selon l'une quelconque des revendications 1 à 4, dans lequel chaque lame (5) de ladite pluralité de lames est capable d'effectuer un mouvement oscillant sans contrainte par rapport aux autres lames (5) et par rapport audit premier châssis (2) et audit second châssis (6), et entre une première position dans laquelle elle fait complètement saillie à l'intérieur du conduit (4) et une position dans laquelle elle est complètement rétractée à l'intérieur dudit second châssis (6), et dans lequel ledit second châssis (6) est dans une position complètement surélevée par rapport au sol.

6. Appareil de coupe de matières herbacées pour ramasseuses-presses rondes selon l'une quelconque des revendications 1 à 5, dans lequel ledit conduit (4) comprend un élément plat (40) formant ledit conduit de transport (4) qui est monté de manière amovible par rapport auxdits premier et second châssis (2, 6).

7. Ramasseuse-presse ronde comprenant le dispositif de protection de surcharge et l'appareil de coupe selon les revendications précédentes.
